Europäisches Patentamt

European Patent Office

Office européen des brevets

(19)

(11) Numéro de publication: **0 359 610**
**A1**

(12) **DEMANDE DE BREVET EUROPEEN**

(21) Numéro de dépôt: **89402276.3**

(22) Date de dépôt: **11.08.89**

(51) Int. Cl.⁵: **B 60 J 1/17**
**B 60 J 10/04**

(30) Priorité: **09.09.88 FR 8811786**

(43) Date de publication de la demande:
**21.03.90 Bulletin 90/12**

(84) Etats contractants désignés: **DE ES IT**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Bascou, Jacques**
**15, rue de la Fontaine Pleureuse**
**Bazemont F-78580 Maule (FR)**

**Chartier, Guy**
**12, rue de la Butte Espagnole**
**F-91940 Gometz le Chatel (FR)**

**Plat, Claude**
**14, rue Chauvelot**
**F-92240 Malakoff (FR)**

(74) Mandataire: **Saint Martin, René et al**
**Régie Nationale des Usines Renault 8 & 10, avenue Emile**
**Zola**
**F-92109 Boulogne Billancourt (FR)**

(54) Dispositif de guidage de vitre coulissante pour porte de véhicule automobile.

(57) L'invention se rapporte à un dispositif de guidage de vitre pour porte de véhicule automobile dans lequel la vitre est pourvue sur son bord de patins de guidage (3 - 4) guidés dans une coulisse (5) du type à lèvres logées dans un cadre (6) de la porte et est déplacée par un mécanisme lève-vitre (2), ce dispositif étant caractérisé par le fait que la coulisse (5) présente au moins un tronçon de montage dépourvu de lèvres et que le cadre (6) est conforme de manière à permettre l'insertion des patins (3 - 4) au niveau desdits tronçons de montage.

FIG.1

EP 0 359 610 A1

**Description**

### DISPOSITIF DE GUIDAGE DE VITRE COULISSANTE POUR PORTE DE VEHICULE AUTOMOBILE

La présente invention se rapporte à un guidage de vitre pour porte de véhicule automobile dans lequel la vitre est pourvue sur son bord de patins de guidage guidés dans une coulisse logée dans un cadre de la porte et est déplacée par un mécanisme lève-vitre.

On connaît des dispositifs du type précédent. Les patins ont généralement une forme en T ou en L.

La présente invention a pour but de fournir un dispositif de guidage de vitre pour porte de véhicule automobile dans lequel la vitre est pourvue sur son bord de patins de guidage guidés dans une coulisse du type à lèvres logée dans un cadre de la porte et est déplacée par un mécanisme lève-vitre et caractérisé par le fait que la coulisse présente au moins un tronçon de montage dépourvu de lèvres et que le cadre est conformé de manière à permettre l'insertion des patins au niveau desdits tronçons de montage.

Selon une caractéristique, le dispositif comporte un coulisseau coulissant sur le cadre de porte et susceptible par translation de ceinturer le cadre et la coulisse au niveau du tronçon de montage.

Selon une autre caractéristique, les patins sont de type à épaulement et coulissent dans des coulisses de forme conjuguées.

L'invention va maintenant être décrite avec plus de détail en se référant à un mode de réalisation donné à titre d'exemple et représente par les dessins annexés sur lesquels :

    - la figure 1 est une vue schématique d'une porte de véhicule automobile équipée d'un dispositif de guidage selon l'invention.

    - la figure 2 est une vue en coupe verticale selon II - II de la figure 1.

    - la figure 3 est une vue de détail de la figure montrant le dispositif de guidage.

    - la figure 4 est une vue de détail de la figure 2.

    - la figure 5 est une coupe selon V - V de la figure 4.

    - la figure 6 est une coupe selon VI - VI de la figure 4.

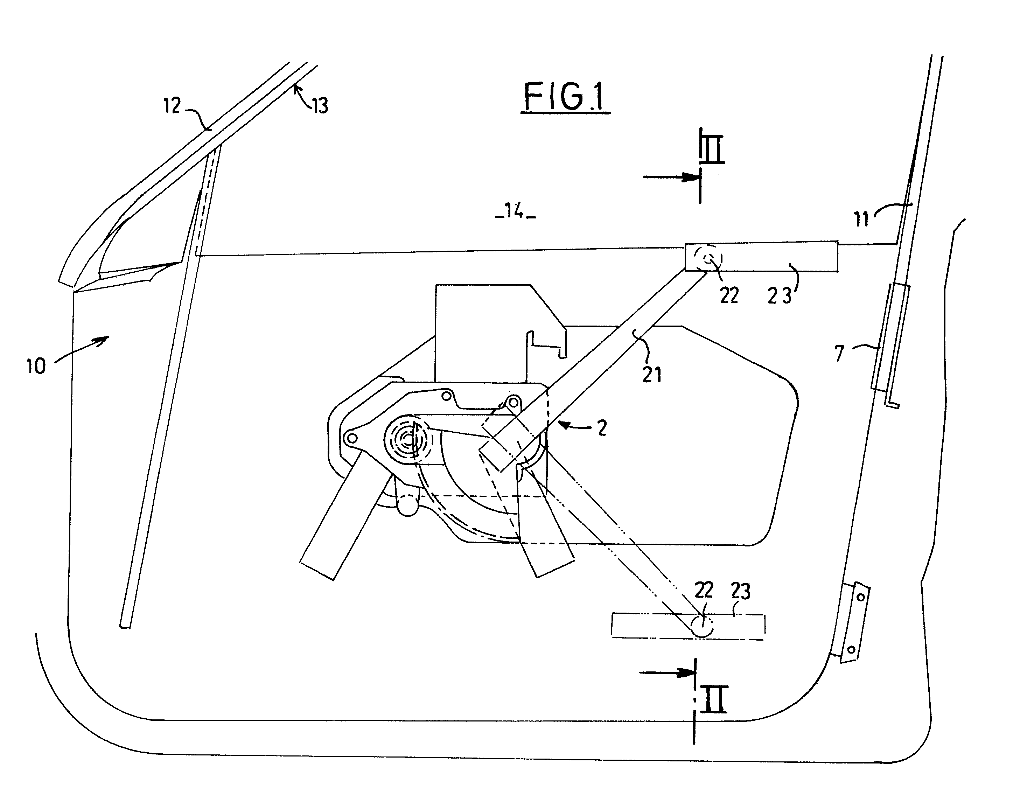

La figure 1 représente une porte avant de véhicule automobile comportant un caisson 10 surmonté par un cadre de baie 13 comportant un premier montant latéral 11 sensiblement vertical et second montant latéral 12 incliné, la vitre coulissante 14 étant appuyée sur le cadre de baie 13 lorsqu'elle est dans sa position levée.

Lors de ses mouvements de montée et de descente, la vitre 14 est guidée à l'arrière par le dispositif de guidage intégré au montant 11. A la figure 1, le système de levage a été représenté en traits pleins position relevée, et en traits mixtes, position basse.

Le mouvement de la vitre est déterminée par un mécanisme lève-vitre 2 de type monobras. Le bras 21 du mécanisme est relié par une articulation 22 à un rail fixé au bas de la vitre.

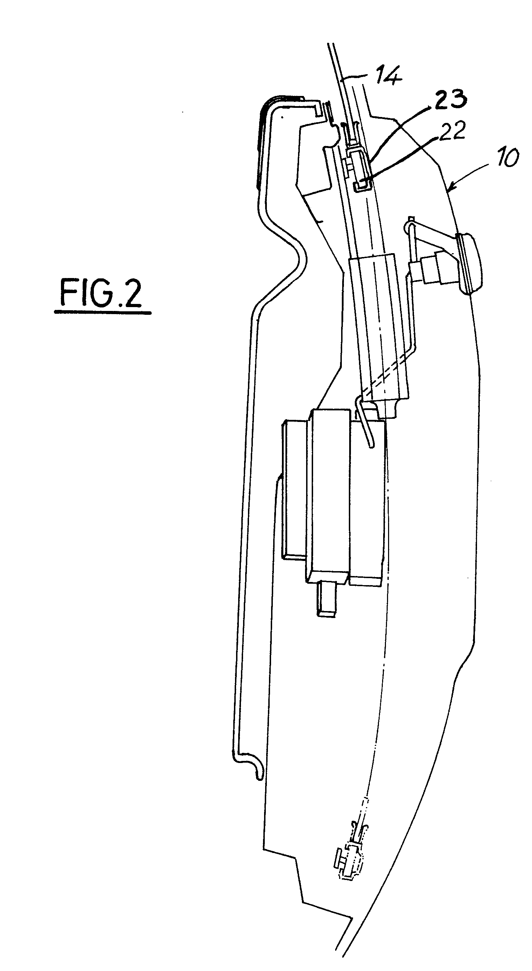

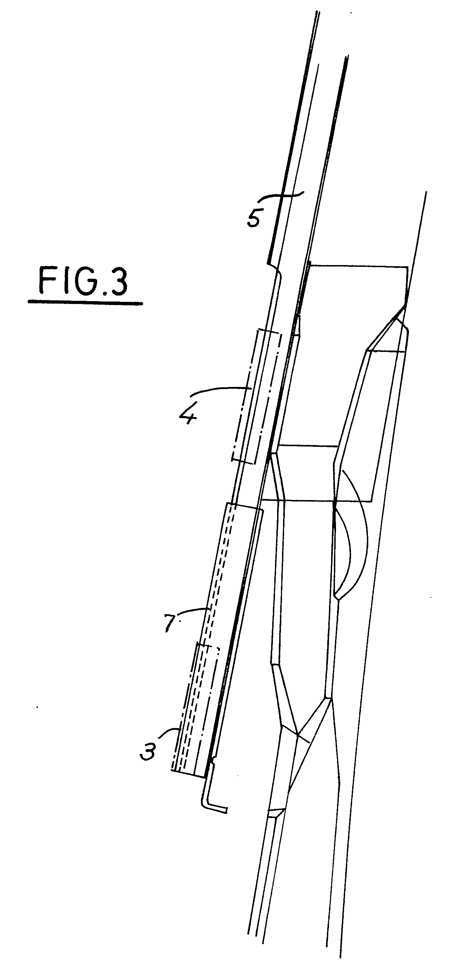

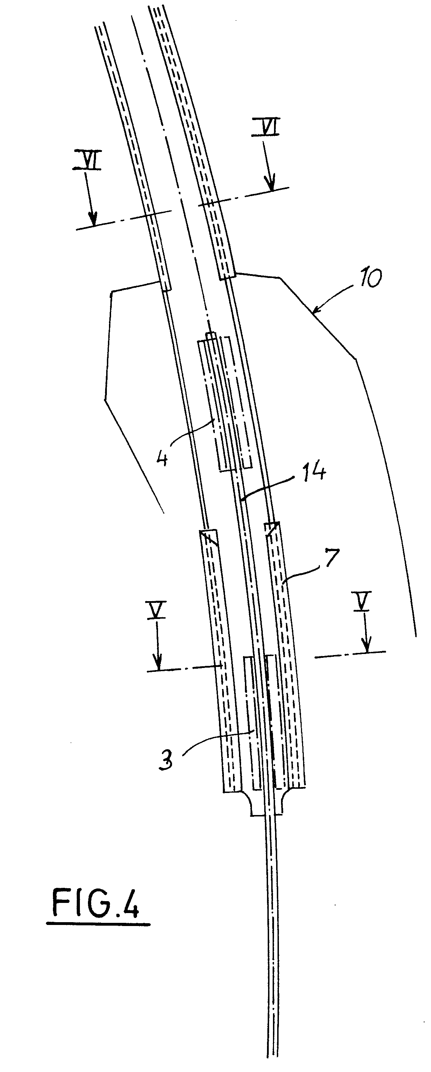

On décrira maintenant le dispositif intégré au montant 11 en se référant aux figures 2 à 5.

La vitre est pourvue sur son bord latéral arrière de deux patins de guidage 3 et 4 du type à épaulement (T) fixés à la vitre par collage. Ces patins coulissent dans une coulisse de vitre 5, en matériau synthétique, enchassés dans un cadre 6 du montant latéral. Ce cadre se loge en partie haute dans le montant et en partie basse dans le caisson de coulisse de vitre présente des lèvres d'étanchéité 53 frottant sur la vitre.

La coulisse 5 présente un tronçon de montage dépourvu de lèvres 53. Le cadre 6 présente un tronçon découpé laissant libre la coulisse 5 à la hauteur de son tronçon. Le tronçon de montage présente une hauteur égale à l'écartement des patins 3 et 4.

La coulisse 5 présente deux rebords 51 et 52 coiffant les épaulements des patins 3 et 4 et débordant le bord 61 du cadre au niveau de la découpe. Ainsi les rebords 51 et 52 sont dégagés et libres du cadre 6 au niveau de la zone de découpe de ce cadre.

Un coulisseau de fermeture 7 est engagé sur le cadre 6 de manière à ceinturer le cadre 6 et la coulisse 5. Il peut par translation dégager le tronçon de montage de la coulisse ou le ceinturer en rabattant les rebords 51 et 52. Le montage s'effectue de la manière suivante.

La mise en place de la vitre se fait en partie basse dans la coulisse 5. Les patins de guidage 3 et 4 sont introduits dans la coulisse en passant par les tronçons de montage du cadre 6 et de la coulisse 5.

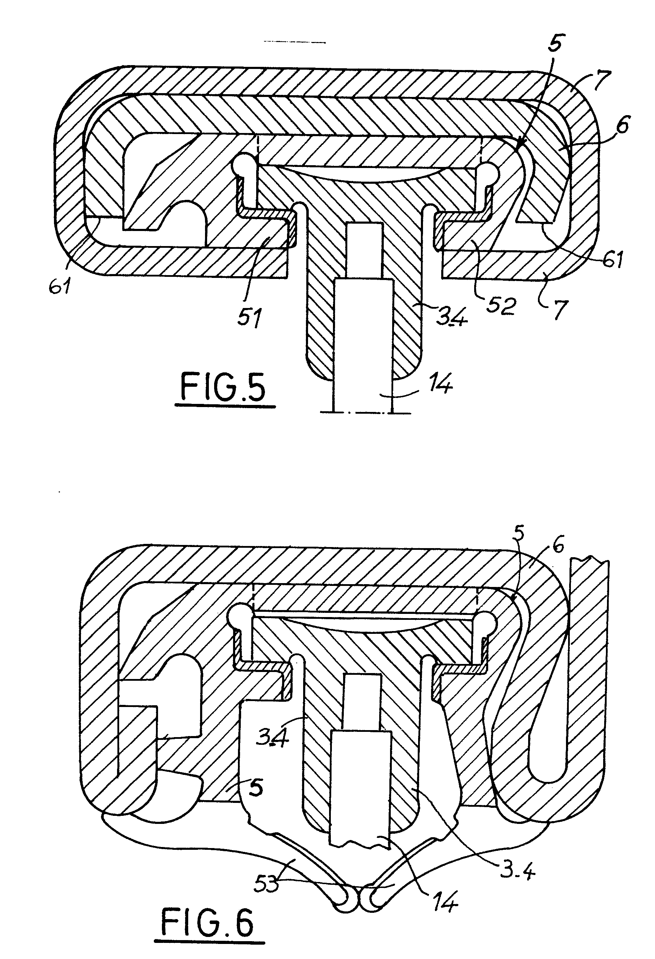

La coulisse 5 n'étant pas retenue au niveau du tronçon de montage, les rebords 51 et 52 peuvent se replier. En poussant la vitre dans le fond du cadre, la coulisse se refermera sur les patins par les rebords 51 et 52 comme le montre la figure 5.

Le coulisseau 7 est déplacé le long du cadre 6. Ce coulisseau 7 assurera le verrouillage de l'ensemble en venant s'emboîter sur la longueur de cadre située au niveau du tronçon de montage. Ce coulisseau est immobilisé sur le cadre après montage par un système de verrouillage du type picot.

Il est bien entendu que l'on pourrait sans sortir du cadre de l'invention imaginer des variantes et des perfectionnements de détail. Ainsi les patins 3 et 4 au lieu d'être en T pourraient être en L.

**Revendications**

1) Dispositif de guidage de vitre pour porte de véhicule automobile dans lequel la vitre est pourvue sur son bord de patins de guidage (3 - 4) guidés dans une coulisse (5) du type à lèvres logées dans un cadre (6) de la porte et est déplacée par un mécanisme lève-vitre (2), caractérisé par le fait que la coulisse (5) présente au moins un tronçon de montage dépourvu de lèvres et que le cadre (6) est conforme de manière à permettre l'insertion des patins (3 - 4) au niveau desdits tronçons de montage.

2) Dispositif selon la revendication 1, caractérisé par le fait qu'il comporte un coulisseau (7) coulissant sur le cadre (6) de porte et susceptible par translation de ceinturer le cadre et la coulisse au niveau des tronçons de montage.

3) Dispositif selon l'une quelconque des revendications précédentes, caractérisé par le fait que les patins sont de type à épaulement et coulissent dans une coulisse (7) de forme conjuguée.

## FIG.1

12  13

II

_14_

11

10

22  23

21

2

7

22  23

II

EP 0 359 610 A1

FIG.2

FIG.3

**FIG.4**

FIG.5

FIG.6

# RAPPORT DE RECHERCHE EUROPEENNE

Office européen des brevets

Numero de la demande

EP 89 40 2276

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-1 430 881 (DAIMLER-BENZ)<br>* Page 5, lignes 11-17; page 6, lignes 7-11; figures 1-3 *<br>--- | 1 | B 60 J 1/17<br>B 60 J 10/04 |
| A | FR-A-2 537 928 (ROLTRA)<br>* Page 5, lignes 11-19; figure 5 *<br>--- | 1 | |
| A | EP-A-0 118 397 (SAIAG)<br>* Page 5, ligne 19 - page 6, ligne 20; figures 1,2 *<br>--- | 1 | |
| A | DE-A-3 119 701 (OPEL)<br>* Page 7, ligne 21 - page 9, ligne 27; figures 3-5 *<br>--- | 1 | |
| A | GB-A- 984 675 (WILMOT-BREEDEN)<br>* Page 3, lignes 59-107; figures 8-11 *<br>----- | 1 | |

DOMAINES TECHNIQUES RECHERCHES (Int. Cl.5)

B 60 J
B 60 R
E 05 F

Le présent rapport a été établi pour toutes les revendications

| Lieu de la recherche | Date d'achèvement de la recherche | Examinateur |
|---|---|---|
| LA HAYE | 11-12-1989 | AYITER I. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P0402)